# EUROPEAN PATENT APPLICATION

(11) **EP 4 394 984 A1**
(43) Date of publication of application: **03.07.2024**
(21) Application number: 22861749.4
(22) Date of filing: 26.08.2022
(51) Int. Cl.: H01M 10/0567, H01M 10/052, H01M 4/525

(54) **ELECTROLYTE FOR LITHIUM SECONDARY BATTERY, AND LITHIUM SECONDARY BATTERY COMPRISING SAME**

(30) Priority: 27.08.2021 KR 20210114242
(71) Applicant: Samsung SDI Co., Ltd., Yongin-si, Gyeonggi-do 17084 (KR)
(72) Inventor: LEE, Jun Yong, Yongin-Si Gyeonggi-do 17084 (KR); KIM, Sang Hoon, Yongin-Si Gyeonggi-do 17084 (KR); KIM, Soo Jin, Yongin-Si Gyeonggi-do 17084 (KR); KIM, Yun Hee, Yongin-Si Gyeonggi-do 17084 (KR); RYU, Su Yeol, Yongin-Si Gyeonggi-do 17084 (KR); SEO, Jin Ah, Yongin-Si Gyeonggi-do 17084 (KR); JEONG, Hye Jeong, Yongin-Si Gyeonggi-do 17084 (KR); CHO, Won Seok, Yongin-Si Gyeonggi-do 17084 (KR); CHOI, Sun Joo, Yongin-Si Gyeonggi-do 17084 (KR)
(74) Representative: Gulde & Partner
(86) International application number: PCT/KR2022/012791
(87) International publication number: WO 2023/027541

(57) **Abstract**

Disclosed are an electrolyte for a lithium secondary battery, and a lithium secondary battery. The electrolyte for a lithium secondary battery includes a lithium salt; an organic solvent; and an additive, wherein the additive includes a compound represented by Formula 1.

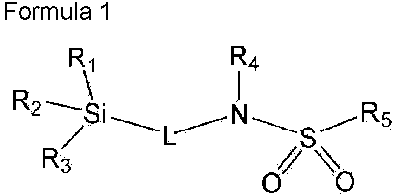

In Formula 1, R¹ to R⁵ are as defined in the detailed description of the disclosure.

## Description

### TECHNICAL FIELD

Disclosed are an electrolyte for a lithium secondary battery, and a lithium secondary battery including the same.

### BACKGROUND ART

Lithium batteries are used as power sources for portable electronic devices such as video cameras, cell phones, and laptop computers. Rechargeable lithium secondary batteries have high gravimetric energy density compared to conventional lead storage batteries, nickel-cadmium batteries, nickel-hydride batteries, nickel-zinc batteries, or the like, and may be rapidly charged.

Lithium batteries operate at a high driving voltage, and thus, an aqueous-based electrolyte solution that is highly reactive with lithium should not be used in the lithium batteries. Generally, an organic electrolyte is used as the electrolyte for a lithium secondary battery. The organic electrolyte is prepared by dissolving a lithium salt in an organic solvent. An example of a preferable organic solvent is one that is stable at a high voltage, has high ion conductivity and permittivity, and has a low viscosity.

However, in the case of an organic electrolyte containing a lithium salt being used as an electrolyte for a lithium secondary battery, the lifetime characteristics, long-term durability, high-temperature stability, etc. of a lithium secondary battery may deteriorate due to side reactions between anode/cathode and the electrolyte.

Accordingly, there is a demand for an electrolyte for lithium secondary batteries that is capable of providing a lithium secondary battery with improved lifetime characteristics and high-temperature stability.

### DESCRIPTION OF EMBODIMENTS

### TECHNICAL PROBLEM

One aspect of the present disclosure provides an electrolyte for a lithium secondary battery, which is capable of improving battery performance.

Another aspect of the present disclosure provides a lithium secondary battery including the electrolyte for a lithium secondary battery.

### SOLUTION TO PROBLEM

According to an aspect of the present disclosure,
provided is an electrolyte for a lithium secondary battery, the electrolyte including: a lithium salt; an organic solvent; and an additive,
wherein the additive includes a compound represented by Formula 1.

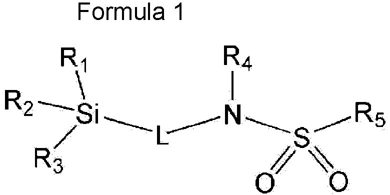

In Formula 1,
R¹ to R⁵ each independently are selected from among hydrogen, deuterium, -F (fluoro group), -CI (chloro group), -Br (bromo group), -I (iodo group), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, an unsubstituted or substituted C₁-C₆₀ alkyl group, an unsubstituted or substituted C₂-C₆₀ alkenyl group, an unsubstituted or substituted C₂-C₆₀ alkynyl group, an unsubstituted or substituted C₁-C₆₀ alkoxy group, an unsubstituted or substituted C₃-C₁₀ cycloalkyl group, an unsubstituted or substituted C₂-C₁₀ heterocycloalkyl group, an unsubstituted or substituted C₃-C₁₀ cycloalkenyl group, an unsubstituted or substituted C₂-C₁₀ heterocycloalkenyl group, an unsubstituted or substituted C₆-C₆₀ aryl group, an unsubstituted or substituted C₆-C₆₀ aryloxy group, an unsubstituted or substituted C₆-C₆₀ arylthio group, an unsubstituted or substituted C₂-C₆₀ heteroaryl group, an unsubstituted or substituted monovalent non-aromatic condensed polycyclic group, an unsubstituted or substituted monovalent non-aromatic condensed heteropolycyclic group, -N(Q₁)(Q₂), and -B(Q₆)(Q₇), wherein Q₁ to Q₇ each independently are selected from among hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀aryl group, a C₆-C₆₀ aryloxy group, a C₆-C₆₀ arylthio group, a C₂-C₆₀ heteroaryl group, a monovalent non-aromatic condensed polycyclic group and a monovalent non-aromatic condensed heteropolycyclic group;
at least one from among R¹ to R³ is a fluoro group (-F); and
L is selected from among O, S, a carbonyl group, an unsubstituted or substituted C₁₋₂₀ alkylene group, an unsubstituted or substituted C₂₋₂₀ alkenylene group, an unsubstituted or substituted C₂₋₂₀ alkynylene group, an unsubstituted or substituted C₁₋₂₀ heteroalkylene group, an unsubstituted or substituted C₂₋₂₀ heteroalkenylene group, an unsubstituted or substituted C₂₋₂₀ heteroalkynylene group, an unsubstituted or substituted C₃₋₂₀ cycloalkyl group, an unsubstituted or substituted 3-20 membered heterocyclo group, an unsubstituted or substituted C₅₋₂₀ aryl group, an unsubstituted or substituted 5-20 membered heteroaryl group, and -N(Q₁)-, wherein Q₁ is as described above.

According to another aspect of the present disclosure, provided is a lithium secondary battery including:
a cathode including a cathode active material;
an anode including an anode active material; and
the above-described electrolyte disposed between the cathode and the anode.

### ADVANTAGEOUS EFFECTS OF DISCLOSURE

By using an electrolyte for a lithium secondary battery according to an embodiment, high-temperature storage characteristics and lifetime characteristics of a lithium secondary battery may be improved.

### BRIEF DESCRIPTION OF DRAWINGS

FIG. 1 is a schematic diagram of a lithium secondary battery according to an embodiment.
FIGS. 2A to 2C are graphs showing internal resistance increase rate, capacity retention ratio, and capacity recovery ratio of the lithium secondary batteries according to Example 1, and Comparative Examples 1 to 4.
FIG. 3 is a graph showing cycle life characteristics at room temperature (25 °C) of the lithium secondary batteries according to Example 1 and Comparative Examples 1 to 4.
FIG. 4 a graph showing cycle life characteristics at room temperature (25 °C) of the lithium secondary batteries according to Examples 1 to 5 and Comparative Examples 5 and 6.

### BEST MODE

Hereinbelow, an electrolyte for a lithium secondary battery, and a lithium secondary battery including the electrolyte according to embodiments will be described in greater detail.

In the present specification, unless otherwise defined, 'substitution' refers to substitution of a hydrogen atom in a compound with a substituent selected from among halogen atoms (F, Br, Cl, or I), a hydroxy group, an alkoxy group, a nitro group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C₁-C₂₀ alkyl group, a C₂-C₂₀ alkenyl group, a C₂-C₂₀alkynyl group, a C₆-C₃₀ aryl group, a C₇-C₃₀ arylalkyl group, a C₁-C₄alkoxy group, a C₁-C₂₀ heteroalkyl group, a C₃-C₂₀ hetero aryl alkyl group, a C₃-C₃₀ cycloalkyl group, a C₃-C₁₅ cycloalkenyl group, a C₆-C₁₅ cycloalkynyl group, a C₂-C₂₀ heterocycloalkyl group, or a combination thereof.

An electrolyte for a lithium secondary battery according to an embodiment includes:
a lithium salt; an organic solvent; and an additive,
wherein the additive includes a compound represented by Formula 1.

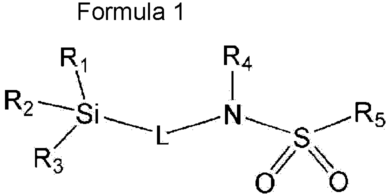

In Formula 1,
R¹ to R⁵ each independently are selected from among hydrogen, deuterium, -F (fluoro group), -CI (chloro group), -Br (bromo group), -I (iodo group), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, an unsubstituted or substituted C₁-C₆₀ alkyl group, an unsubstituted or substituted C₂-C₆₀ alkenyl group, an unsubstituted or substituted C₂-C₆₀ alkynyl group, an unsubstituted or substituted C₁-C₆₀ alkoxy group, an unsubstituted or substituted C₃-C₁₀ cycloalkyl group, an unsubstituted or substituted C₂-C₁₀ heterocycloalkyl group, an unsubstituted or substituted C₃-C₁₀ cycloalkenyl group, an unsubstituted or substituted C₂-C₁₀ heterocycloalkenyl group, an unsubstituted or substituted C₆-C₆₀ aryl group, an unsubstituted or substituted C₆-C₆₀ aryloxy group, an unsubstituted or substituted C₆-C₆₀ arylthio group, an unsubstituted or substituted C₂-C₆₀ heteroaryl group, an unsubstituted or substituted monovalent non-aromatic condensed polycyclic group, an unsubstituted or substituted monovalent non-aromatic condensed heteropolycyclic group, -N(Q₁)(Q₂), and -B(Q₆)(Q₇), wherein Q₁ to Q₇ each independently are selected from among hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀aryl group, a C₆-C₆₀ aryloxy group, a C₆-C₆₀ arylthio group, a C₂-C₆₀ heteroaryl group, a monovalent non-aromatic condensed polycyclic group and a monovalent non-aromatic condensed heteropolycyclic group;
at least one from among R¹ to R³ is a fluoro group (-F); and
L is selected from among O, S, a carbonyl group, an unsubstituted or substituted C₁₋₂₀ alkylene group, an unsubstituted or substituted C₂₋₂₀ alkenylene group, an unsubstituted or substituted C₂₋₂₀ alkynylene group, an unsubstituted or substituted C₁₋₂₀ heteroalkylene group, an unsubstituted or substituted C₂₋₂₀ heteroalkenylene group, an unsubstituted or substituted C₂₋₂₀ heteroalkynylene group, an unsubstituted or substituted C₃₋₂₀ cycloalkyl group, an unsubstituted or substituted 3-20 membered heterocyclo group, an unsubstituted or substituted C₅₋₂₀ aryl group, an unsubstituted or substituted 5-20 membered heteroaryl group, and -N(Q₁)-, wherein Q₁ is as described above.

By including within the same molecule an amine group containing a sulfone group (-SO₂-), and a silyl group substituted with at least one fluoro group, the compound represented by Formula 1 may achieve both properties attributable to the above two functional groups. In other words, the amine group containing a sulfone group (-SO₂-) serves to inhibit an increase in resistance during high-temperature storage of a lithium secondary battery, and the silyl group substituted with at least one fluoro group serves to improve low-temperature discharge characteristics by inducing the release of a greater amount of electrons while discharging at low temperatures.

The two functional groups may dissociate as lithium salts within the electrolyte to form a film on the surface of cathode and/or anode, and thus serve to reduce initial resistance, inhibit an increase in resistance during high-temperature storage, reduce gas emissions, and the like.

Specifically, the amine group containing a sulfone group (-SO₂-) dissociates within the electrolyte to form a lithium salt containing a sulfite-based functional group, LiSO₃R⁶⁺, which migrates to an anode to be reduced and dissociated on the anode surface, thereby forming a solid electrolyte interphase (SEI) film having excellent solidity and ion conductivity. Accordingly, the initial SEI film formation may inhibit dissociation that may occur on the anode surface during high-temperature cycling, and prevent decomposition of the initially formed SEI film that might occur during high-temperature storage. In addition, the lithium salt containing a sulfite-based functional group forms a film on the cathode surface as well and prevents oxidation of the electrolyte solution at the cathode, and thus may serve to reduce an increase in internal resistance of a lithium secondary battery.

In addition, during the initial reduction of electrolyte at the anode surface, F⁻ forms a strongly adhesive LiF-containing SEI and thereby may reduce the volume change of anode containing Si. As a result, in a lithium secondary battery adopting a Si-containing anode, long-term lifetime may be improved, as well as gas emissions during high-temperature storage may be reduced.

Accordingly, in the case of the above compound is used as an electrolyte additive of a lithium secondary battery, resistance during high-temperature storage and lifetime characteristics of the lithium secondary battery may be improved.

According to an embodiment, in Formula 1:
R¹ to R⁵ each independently are selected from among an unsubstituted or substituted C₁-C₈ alkyl group, an unsubstituted or substituted C₂-C₈ alkenyl group, an unsubstituted or substituted C₂-C₈ alkynyl group, or an unsubstituted or substituted C₁-C₈ alkoxy group;
one or two from among R¹ to R³ are a fluoro group (-F); and
L is selected from among an unsubstituted or substituted C₁₋₈ alkylene group, an unsubstituted or substituted C₂₋₄ alkenylene group, an unsubstituted or substituted C₂₋₄ alkynylene group, an unsubstituted or substituted C₁₋₄ heteroalkylene group, an unsubstituted or substituted C₂₋₄ heteroalkenylene group, an unsubstituted or substituted C₂₋₄ heteroalkynylene group, an unsubstituted or substituted C₃₋₆ cycloalkyl group, an unsubstituted or substituted 3-8 membered heterocyclo group, an unsubstituted or substituted C₅₋₈aryl group, and an unsubstituted or substituted 5-8 membered heteroaryl group.

According to an embodiment, in Formula 1, one or two of R¹ to R³ may be a fluoro group (-F). For example, one of R¹ to R³ may be a fluoro group (-F). Keeping the number of fluoro groups being substituted at 2 or fewer may minimize the amount of gas emissions during storage at high temperatures.

For example, in Formula 1, R¹ to R⁵ each independently may be selected from hydrogen, a methyl group, an ethyl group, a propyl group, an iso-propyl group, a butyl group, an iso-butyl group, a sec-butyl group, a tert-butyl group, -F, -Cl, -Br, -I, a methoxy group, an ethoxy group, an ethenyl group, an isocyanate(-N=C=O) group, and a -CF₃ group, R₈ and R₉ each independently may be selected from among a methyl group, an ethyl group, a propyl group, an iso-propyl group, a butyl group, an iso-butyl group, a sec-butyl group, a tert-butyl group, and a -CF₃ group, and one or two of R¹ to R³ are a fluoro group (-F).

For example, in Formula 1, L may be -O-, -S-, -C(=O)-, -CH₂-, -CHF-, -CF₂-, -C=C-, -O-CH₂-, -CH₂-CH₂-, -CF₂-CF₂-, -O-CH₂-CH₂-, -CH₂-O-CH₂-, -O-CH₂-O-CH₂-, -CF₂-CH₂-CF₂-, -O-CF₂-CH₂-CF₂-, -CH₂-CH₂-CH₂-, -O-CH₂-CH₂-CH₂-, -CF₂-CF₂-CF₂-, -CH₂-CH₂-CH₂-CH₂-, -CF₂-CH₂-CH₂-CF₂-, -CF₂-CF₂-CF₂-CF₂-, -C(CH₃)₂-, -C(C₂H₅)₂-, -C(C₃H₇)₂-, -C(CH₃)₂-C(CH₃)₂-, -CH₂-CH₂-C(CH₃)₂-, -CF₂-CH₂-C(CH₃)₂-, -C(CH₃) ₂-CH₂-C(CH₃)₂-, -C(C₆H₅)₂-C(C₆H₅)₂-, -CF₂-CH₂-C(C₆H₅)₂-, -C(C₆H₅)₂-CH₂-C(C₆H₅)₂-, or the like. For example, L may be -O-, -S-, -C(=O)-, -CH₂-, -O-CH₂-, or the like.

According to an embodiment, in Formula 1, one of R¹ to R³ may be a fluoro group (-F), and L may be an unsubstituted or substituted C₁₋₈ alkylene group.

According to an embodiment, the compound may be represented by Formula 2.

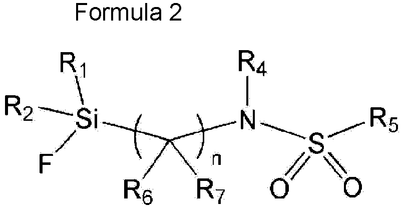

In Formula 2,
R₁, R₂, R₄, and R₇ each independently are selected from among hydrogen, a halogen, an unsubstituted or substituted C₁-C₈ alkyl group, an unsubstituted or substituted C₂-C₈ alkenyl group, an unsubstituted or substituted C₂-C₈ alkynyl group, an unsubstituted or substituted C₁-C₈ alkoxy group, an unsubstituted or substituted C₃-C₈ cycloalkyl group, an unsubstituted or substituted C₂-C₈ heterocycloalkyl group, an unsubstituted or substituted C₃-C₈ cycloalkenyl group, an unsubstituted or substituted C₂-C₈ heterocycloalkenyl group, an unsubstituted or substituted C₆-C₈ aryl group, an unsubstituted or substituted C₆-C₈ aryloxy group, an unsubstituted or substituted C₆-C₈ arylthio group, and an unsubstituted or substituted C₂-C₈ heteroaryl group; and
n is an integer of 1 to 20.

For example, in Formula 2, R₁, R₂, R₄ and R₅ each independently may be selected from among a methyl group, an ethyl group, a propyl group, an iso-propyl group, a butyl group, an iso-butyl group, a sec-butyl group, a tert-butyl group, a methoxy group, an ethoxy group, an ethenyl group, an isocyanate (-N=C=O) group, and -CF₃ group.

For example, in Formula 2, R₆ and R₇ each independently may be selected from among hydrogen, a methyl group, an ethyl group, a propyl group, an iso-propyl group, a butyl group, an iso-butyl group, a sec-butyl group, a tert-butyl group, -F, -Cl, -Br, -I, a methoxy group, an ethoxy group, an ethenyl group, an isocyanate(-N=C=O) group, and a -CF₃ group, and R₈ and R₉ each independently may be selected from among a methyl group, an ethyl group, a propyl group, an iso-propyl group, a butyl group, an iso-butyl group, a sec-butyl group, a tert-butyl group, and a -CF₃ group.

For example, n in Formula 2 may be an integer of 1 to 10.

Specifically, for example, n in Formula 2 may be an integer of 1 to 5.

More specifically, for example, n in Formula 2 may be an integer of 2 to 5.

For example, n in Formula 2 may be an integer of 3, and may be represented by Formula 2a.

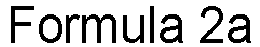

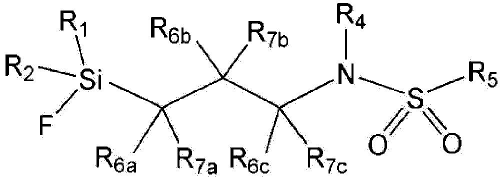

In Formula 2a,
R₁, R₂, R₄, R₅, R₆ₐ, R_{6b}, R_{6c}, R₇ₐ, R_{7b}, and R₇, are each independently are selected from among hydrogen, a halogen, an unsubstituted or substituted C₁-C₈ alkyl group, an unsubstituted or substituted C₂-C₈ alkenyl group, an unsubstituted or substituted C₂-C₈ alkynyl group, an unsubstituted or substituted C₁-C₈ alkoxy group, an unsubstituted or substituted C₃-C₈ cycloalkyl group, an unsubstituted or substituted C₂-C₈ heterocycloalkyl group, an unsubstituted or substituted C₃-C₈ cycloalkenyl group, an unsubstituted or substituted C₂-C₈ heterocycloalkenyl group, an unsubstituted or substituted C₆-C₈ aryl group, an unsubstituted or substituted C₆-C₈ aryloxy group, an unsubstituted or substituted C₆-C₈ arylthio group, and an unsubstituted or substituted C₂-C₈ heteroaryl group.

For example, the compound may be a compound represented by Formula 3.

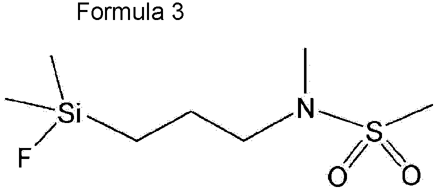

By including the above compound, the electrolyte for a lithium secondary battery may have improved resistance characteristics during high-temperature storage, lifetime characteristics, and the like.

Furthermore, the electrolyte for a lithium secondary battery exhibits an excellent resistance suppression effect at high temperatures in a lithium secondary battery that contains a lithium transition metal oxide with a high nickel content as a cathode active material, and thus may provide a lithium secondary battery with improved lifetime and high temperature stability.

The content of a compound represented by Formula 1 may be in a range of 0.001 part by weight to 20 parts by weight with respect to 100 parts by weight of an electrolyte solution consisting of a lithium salt and an organic solvent. The upper limit of the content range of the compound may be 20 parts by weight with respect to the total weight of the electrolyte, and for example, may be 15 parts by weight, 10 parts by weight, 5 parts by weight, 3 parts by weight, or 1 part by weight. For example, the lower limit of the content range of the compound may be, with respect to the total weight of the electrolyte, 0.001 part by weight, 0.01 part by weight, 0.05 part by weight, 0.07 part by weight, 0.1 part by weight, 0.2 part by weight, 0.3 part by weight, 0.4 part by weight, or 0.5 parts by weight. Within the above ranges, it is possible to effectively improve characteristics such as high-temperature storage characteristics and low temperature discharge capacity of a lithium secondary battery. Without being limited to the above ranges, the content of the compound may be adjusted within a normal range by taking into account a combination of other additives and the use of materials such as a cathode active material, an anode active material, and the like.

According to an embodiment, the electrolyte for a lithium secondary battery may further include a compound represented by Formula 4 in addition to a compound represented by Formula 1.

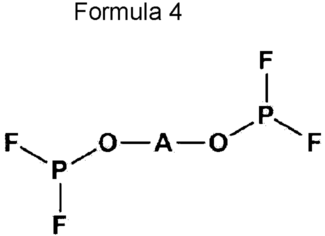

In Formula 4,
A is an unsubstituted or substituted aliphatic hydrocarbon or (-C₂H₄-O-C₂H₄-)n,
wherein n is selected from among integers of 1 to 10, and
the substituted aliphatic hydrocarbon has one or more substituents, each independently selected from among a C₁-C₂₀ alkyl group, a C₂-C₂₀ alkenyl group, a C₂-C₂₀ alkynyl group, a C₁-C₂₀ alkoxy group, a halogen, a cyano group, a hydroxy group, and a nitro group.

By combining a compound represented by Formula 1 and a compound represented by Formula 4, performance such as room temperature lifetime characteristics may be further improved. In the case of the content of the compound represented by Formula 1 is reduced, the compound represented by Formula 4 acts as an alternative additive thereto and may effectively bring about an improvement in battery characteristics.

Difluorophosphate (-PF₂) end groups of the compound represented by Formula 4 may be coordinated with thermal decomposition products of the lithium salt (e.g., PF₅) or anions dissociated from the lithium salt (e.g., PF₆ anions) present in the electrolyte for a lithium battery to stabilize the thermal decomposition products and/or the anions. As the thermal decomposition products of the lithium salt, or dissociated anions thereof are stabilized, side reactions between the electrolyte for a secondary battery and such products and anions may be inhibited. Accordingly, a further improvement in lifetime characteristics of the lithium secondary battery may be achieved.

According to an embodiment, in Formula 4, A may be at least one selected from among a C₁-C₂₀ aliphatic hydrocarbon; a C₁-C₂₀ aliphatic hydrocarbon substituted with at least one of a C₁-C₂₀ alkyl group, a C₂-C₂₀ alkenyl group, a C₂-C₂₀ alkynyl group, a C₁-C₂₀ alkoxy group, a halogen, a cyano group, a hydroxyl group, and a nitro group; and (-C₂H₄-O-C₂H₄-)ₙ wherein n may be selected from among integers of 1 to 5.

For example, in Formula 4, A may be a C₁-C₂₀ alkylene group, a C₂-C₂₀ alkenylene group, or a C₂-C₂₀ alkynylene group.

For example, in Formula 4, A may be a methylene group, an ethylene group, a propylene group, a butylene group, or an ethenylene group. For example, in Formula 1, A may be an ethylene group.

In particular, the compound represented by Formula 4 may be a compound represented by Formula 4a below.

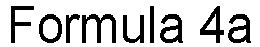

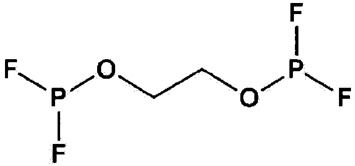

The content of the compound represented by Formula 4 in the electrolyte for a lithium secondary battery may be 0.01 parts by weight to 5 parts by weight, with respect to 100 parts by weight of an electrolyte solution composed of a lithium salt and an organic solvent, but is not necessarily limited to this range and may be used in an appropriate amount as needed. For example, the content of the compound represented by Formula 4 in the electrolyte for a lithium secondary battery may be, with respect to the total weight of an electrolyte solution composed of a lithium salt and an organic solvent, 0.01 parts by weight to 4 parts by weight, 0.01 parts by weight to 3 parts by weight, 0.01 parts by weight to 2 parts by weight, or 0.05 parts by weight to 1 part by weight. Within the above ranges, further improved battery characteristics may be obtained.

According to an embodiment, the electrolyte may further include other additives. Examples of the other additives may include at least one from among a vinylene carbonate (VC), a fluoroethylene carbonate (FEC), a difluoroethylene carbonate (DFEC), a chloroethylene carbonate (CEC), a dichloroethylene carbonate (DCEC), a bromoethylene carbonate (BEC), a dibromoethylene carbonate (DBEC), a nitroethylene carbonate, a cyanoethylene carbonate, a vinylethylene carbonate (VEC), succinonitrile (SN), adiponitrile (AN), 1,3,6-hexanetricyanide (HTCN), a propensultone (PST), a propanesultone (PS), lithium tetrafluoroborate (LiBF₄), lithium difluorophosphate (LiPO₂F₂) and 2-fluoro biphenyl (2-FBP).

The other additives may be included in an amount of 0.2 parts by weight to 20 parts by weight, in particular, 0.2 parts by weight to 15 parts by weight, for example, 0.2 parts by weight to 10 parts by weight, with respect to 100 parts by weight of the electrolyte solution consisting of the lithium salt and the organic solvent. Within the above ranges, it is possible to minimize an increase of film resistance due to the other additives, thereby contributing an improvement in battery performance.

According to an embodiment, the lithium salt may include one or more selected from among LiPF₆, LiBF₄, LiSbF₆, LiAsF₆, LiCIO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (2≤x≤20 and 2≤y≤20), LiCl, Lil, lithium bis(fluorosulfonyl)imide (LiFSI), lithium bis(oxalato)borate (LiBOB), LiPO₂F₂, and compounds represented by Formulas 4 to 7. Here, the lithium salt is not limited to the aforementioned examples and may be any lithium salt available in the art.

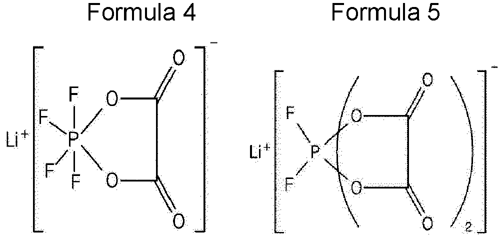

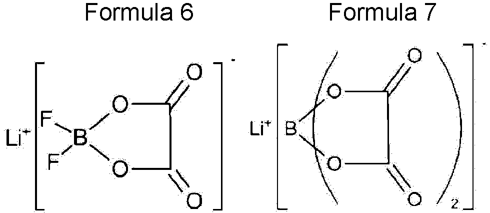

In the electrolyte, the concentration of the lithium salt may be from 0.01 M to 5.0 M, for example, from 0.05 M to 5.0 M, for example, from 0.1 M to 5.0 M, for example, from 0.1 M to 2.0 M. In the case of the concentration of the lithium salt being within the above ranges, a further improvement in the characteristics of a lithium secondary battery may be obtained.

The organic solvent may be one or more selected from among a carbonate-based solvent, an ester-based solvent, an ether-based solvent, and a ketone-based solvent.

Examples of the carbonate-based solvent include ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC), ethylene carbonate (EC), fluoroethylene carbonate (FEC), vinylene carbonate (VC), vinylethylene carbonate (VEC), butylene carbonate (BC), and the like. Examples of the ester-based solvent include methyl propionate, ethyl propionate, propyl propionate, ethyl butyrate, methyl acetate, ethyl acetate, n-propyl acetate, dimethyl acetate, γ-butyrolactone, decanolide, γ-valerolactone, mevalonolactone, caprolactone, and the like. Examples of the ketone-based solvent include cyclohexanone and the like. Examples of the nitrile-based solvent include acetonitrile (AN), succinonitrile (SN), adiponitrile, and the like. Other solvents that may be used include dimethyl sulfoxide, dimethylformamide, dimethylacetamide, tetrahydrofuran, and the like, but are not necessarily limited to the aforementioned examples, and may be any organic solvent available in the art. For example, the organic solvent may include a mixed solvent containing 50 vol% to 95 vol% of a chain carbonate and 5 vol% to 50 vol% of a cyclic carbonate, for example, a mixed solvent containing 70 vol% to 95 vol% of a chain carbonate and 5 vol% to 30 vol% of a cyclic carbonate. For example, the organic solvent may be a mixed solvent containing three or more types of organic solvents.

According to an embodiment, the organic solvent may include one or more selected from among an ethyl methyl carbonate (EMC), a methyl propyl carbonate (MPC), an ethyl propyl carbonate (EPC), a dimethyl carbonate (DMC), a diethyl carbonate (DEC), a dipropyl carbonate (DPC), a propylene carbonate (PC), an ethylene carbonate (EC), a fluoroethylene carbonate (FEC), a vinylene carbonate (VC), a vinylethylene carbonate (VEC), a butylene carbonate, an ethyl propionate, a propyl propionate, an ethyl butyrate, a dimethyl sulfoxide, a dimethylformamide, a dimethylacetamide, γ-valerolactone, γ-butyrolactone, and tetrahydrofuran. However, the organic solvent is not limited to the aforementioned examples and may be any organic solvent available in the art.

The electrolyte may be in a liquid or gel state. The electrolyte may be prepared by adding a lithium salt, and the above-described additives to an organic solvent.

A lithium secondary battery according to another embodiment includes: a cathode including a cathode active material; an anode including an anode active material; and the above-described electrolyte disposed between the cathode and the anode.

By including the above compound, the lithium secondary battery may have improved resistance characteristics, lifetime characteristics, and the like during high-temperature storage.

The cathode active material includes a lithium transition metal oxide including nickel and another transition metal. In the lithium transition metal oxide including nickel and another transition metal, the content of nickel may be 60 mol% or more, for example, 75 mol% or more, for example, 80 mol% or more, for example, 85 mol% or more, for example, 90 mol% or more, with respect to the total number of moles of transition metals.

For example, the lithium transition metal oxide may be a compound represented by Formula 8:

Formula 8 LiₐNiₓCo_{y}M_{z}O_{2-b}A_{b}

In Formula 8, 1.0≤a≤1.2, 0≤b≤0.2, 0.6≤x<1, 0<y≤0.3, 0<z≤0.3, and x+y+z=1, wherein M is at least one selected from among manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and wherein A is F, S, Cl, Br, or a combination thereof. For example, 0.7≤x<1, 0<y≤0.3, 0<z≤0.3; 0.8≤x<1, 0<y≤0.3, 0<z≤0.3; 0.8≤x<1, 0<y≤0.2, 0<z≤0.2; 0.83≤x<0.97, 0<y≤0.15, and 0<z≤0.15; or 0.85≤x<0.95, 0<y≤0.1, and 0<z≤0.1 may be satisfied.

For example, the lithium transition metal oxide may be at least one of compounds represented by Formulas 9 and 10:

Formula 9 LiNiₓCo_{y}Mn_{z}O₂

In Formula 4, 0.6≤x≤0.95, 0<y≤0.2, and 0<z≤0.1. For example, 0.7≤x≤0.95, 0<y≤0.3, and 0<z≤0.3 may be satisfied.

Formula 10 LiNiₓCo_{y}Al_{z}O₂

In Formula 10, it may be 0.6≤x≤0.95, 0<y≤0.2, and 0<z≤0.1. For example, 0.7≤x≤0.95, 0<y≤0.3, and 0<z≤0.3 may be satisfied. For example, 0.8≤x≤0.95, 0<y≤0.3, and 0<z≤0.3 may be satisfied. For example, 0.82≤x≤0.95, 0<y≤0.15, and 0<z≤0.15 may be satisfied. For example, 0.85≤x≤0.95, 0<y≤0.1, and 0<z≤0.1 may be satisfied.

For example, the lithium transition metal oxide may be LiNi_{0.6}Co_{0.2}Mn_{0.2}O₂, LiNi_{0.88}Co_{0.08}Mn_{0.04}O₂, LiNi_{0.8}Co_{0.15}Mn_{0.05}O₂, LiNi_{0.8}Co_{0.1}Mn_{0.1}O₂, LiNi_{0.88}Co_{0.1}Mn_{0.02}O₂, LiNi_{0.8}Co_{0.15}Al_{0.05}O₂, LiNi_{0.8}Co_{0.1}Mn_{0.2}O₂, or LiNi_{0.88}Co_{0.1}Al_{0.02}O₂.

According to another embodiment, the cathode active material includes at least one active material selected from among Li-Ni-Co-Al (NCA), Li-Ni-Co-Mn (NCM), lithium cobalt oxide (LiCoO₂), lithium manganese oxide (LiMnO₂), lithium nickel oxide (LiNiO₂), and lithium iron phosphate (LiFePO₄).

The anode active material may include at least one selected from among a silicon-based compound, a carbon-based compound, a composite of a silicon-based compound and a carbon-based compound, and a silicon oxide (SiOₓ, 0<x<2). The silicon-based compound may be a silicon particle, a silicon alloy particle, and the like.

The silicon-based compound may have a size of less than 200 nm, for example, a size of 10 nm to 150 nm. The term "size" as used herein refers to an average particle diameter if a silicon particle in the silicon-based compound is spherical, and refers to a major axis length if the silicon particle is non-spherical.

Because the silicon-based compound having a size within the above ranges provides excellent lifetime characteristics, using an electrolyte according to an embodiment may further improve the lifetime of a lithium secondary battery.

The carbonaceous material may be, for example, a crystalline carbon, an amorphous carbon, or a mixture thereof. Examples of the crystalline carbon may include graphite, including artificial graphite or natural graphite in shapeless, plate, flake, spherical or fiber form, and examples of the amorphous carbon may include soft carbon (low-temperature calcined carbon) or hard carbon, mesophase pitch carbides, calcined cokes, and the like.

A composite of a silicon-based compound and a carbon-based compound may be a composite having a structure in which silicon nanoparticles are disposed on top of the carbon-based compound, a composite in which silicon particles are included on the surface and inside of the carbon-based compound, and a composite in which silicon particles are coated with the carbon-based compound to thereby be included within the carbon-based compound. In the composite of a silicon-based compound and a carbon-based compound, the carbon-based compound may be graphite, graphene, a graphene oxide, or a combination thereof.

Examples of the composite of a silicon-based compound and a carbon-based compound may include an active material obtained by carbon-coating carbon-based compound particles after distributing thereon silicon nanoparticles having an average diameter of about 200 nm or less, an active material having silicon (Si) particles on top of and inside graphite, and the like. An average diameter of secondary particles of the composite of a silicon-based compound and a carbon-based compound may be from 5 µm to 20 µm. The silicon nanoparticles may have an average particle diameter of 5 nm or more, for example 10 nm or more, for example 20 nm or more, for example 50 nm or more, or for example 70 nm or more. The average particle diameter of the silicon nanoparticles may be 200 nm or less, 150 nm or less, 100 nm or less, 50 nm or less, 20 nm or less, or 10 nm or less. For example, the average particle diameter of the silicon nanoparticles may be 100 nm to 150 nm.

The average particle diameter of secondary particles of the composite of a silicon-based compound and a carbon-based compound may be from 5 µm to 18 µm, for example, from 7 µm to 15 µm, or for example, from 10 µm to 13 µm.

As other examples of the composite of a silicon-based compound and a carbon-based compound, the porous silicon composite cluster disclosed in Korean Application Publication No. 10-2018-0031585, and the porous silicon composite cluster structure disclosed in Korean Application Publication No. 10-2018-0056395 may be used. Korean Application Publication No. 10-2018-0031586 and Korean Application Publication No. 10-2018-0056395 are incorporated by reference herein.

A silicon-carbon based compound complex according to an embodiment may be a porous silicon composite cluster containing a porous core and a shell, the core including a porous silicon composite secondary particle and the shell including second graphene disposed on the core, wherein the porous silicon composite secondary particle includes an aggregate of two or more silicon composite primary particles, wherein the silicon composite primary particles may include silicon; a silicon oxide (SiOₓ) (0<x<2) disposed on the silicon; and first graphene disposed on the silicon oxide.

According to another embodiment, a silicon-carbon based compound complex may include: a porous silicon composite cluster containing a porous silicon composite secondary particle, and a second carbon flake on at least one surface of the porous silicon composite secondary particle; and a carbon-based coating film including an amorphous carbon, disposed on the porous silicon composite cluster, wherein the porous silicon composite secondary particle includes an aggregate of two or more silicon composite primary particles, wherein the silicon composite primary particles may include silicon; a silicon oxide (SiOₓ) (0<x<2) disposed on at least one surface of the silicon; and a first carbon flake on at least one surface of the silicon oxide, wherein the silicon oxide is present in the state of a film, a matrix, or a combination thereof.

The first carbon flake and second carbon flake may each be present in the state of a film, a particle, a matrix, or a combination thereof. The first carbon flake and second carbon flake may each be graphene, graphite, carbon fibers, graphene oxide, or the like.

The composite of a silicon-based compound and a carbon-based compound may be a composite having a structure in which silicon nanoparticles are disposed on top of the carbon-based compound, a composite in which silicon particles are included on the surface and inside of the carbon-based compound, and a composite in which silicon particles are coated with the carbon-based compound to thereby be included within the carbon-based compound. In the composite of a silicon-based compound and a carbon-based compound, the carbon-based compound may be graphite, graphene, a graphene oxide, or a combination thereof.

The lithium secondary battery is not limited to any particular shape, and may include a lithium ion battery, a lithium ion polymer battery, a lithium sulfur battery, and the like.

The lithium secondary battery may be prepared as follows.

First, a cathode may be prepared.

For example, a cathode active material composition containing a mixture of a cathode active material, a conductive material, a binder, and a solvent may be prepared. The cathode active material composition may be directly coated on a metal current collector to thereby form a cathode plate. In one or more embodiments, the cathode active material composition may be cast on a separate support, and a film exfoliated from the support may be laminated on a metal current collector to thereby form a cathode plate. The cathode is not limited to the aforementioned forms, and may be another form other than the aforementioned forms.

The cathode active material may be a lithium-containing metal oxide and may utilize, without any limitation, any lithium-containing metal oxide commonly used in the art. For example, the cathode active material may utilize at least one composite oxide of lithium with a metal selected from among cobalt, manganese, nickel, and a combination thereof. As a specific example, a compound represented by any one of the following formulas may be used: LiₐA_{1-b}B¹_{b}D¹₂ (In the formula, 0.90≤a≤1.8 and 0≤b≤0.5); LiₐE_{1-b}B¹_{b}O_{2-c}D¹_{c} (In the formula, 0.90≤a≤1.8, 0≤b≤0.5, and 0≤c≤0.05); LiE_{2-b}B¹_{b}O₄-_{c}D¹_{c} (In the formula, 0≤b≤0.5 and 0≤c≤0.05); LiₐNi_{1-b-c}Co_{b}B¹_{c}D¹_{α} (In the formula, 0.90≤a≤1.8, 0≤b≤0.5, 0≤c≤0.05, and 0<a≤2); LiₐNi_{1-b-c}Co_{b}B¹_{c}O_{2-α}F¹_{α} (In the formula, 0.90≤a≤1.8, 0≤b≤0.5, 0≤c≤0.05, and 0<α<2); LiₐNi_{1b-c}Co_{b}B¹_{c}O_{2-α}F¹₂ (In the formula, 0.90≤a≤1.8, 0≤b≤0.5, 0≤c≤0.05, and 0<α<2); LiₐNi_{1-b-c}Mn_{b}B¹_{c}D_{α} (In the formula, 0.90≤a≤1.8, 0≤b≤0.5, 0≤c≤0.05, and 0<α≤2); LiₐNi_{1-b-c}Mn_{b}B¹_{c}O_{2-α}F¹_{α} (In the formula, 0.90≤a≤1.8, 0≤b≤0.5, 0≤c≤0.05, and 0<α<2); LiₐNi_{1-b-c}Mn_{b}B¹_{c}O_{2-α}F¹₂ (In the formula, 0.90≤a≤1.8, 0≤b≤0.5, 0≤c≤0.05, and 0<α<2); LiₐNi_{b}E_{c}G_{d}O₂ (In the formula, 0.90≤a≤1.8, 0≤b≤0.9, 0≤c≤0.5, and 0.001 ≤d≤0.1); LiₐNi_{b}Co_{c}Mn_{d}GeO₂ (In the formula, 0.90≤a≤1.8, 0≤b≤0.9, 0≤c≤0.5, 0≤d≤0.5, and 0.001≤e≤0.1); LiₐNiG_{b}O₂ (In the formula, 0.90≤a≤1.8 and 0.001≤b≤0.1); LiₐCoG_{b}O₂ (In the formula, 0.90≤a≤1.8 and 0.001≤b≤0.1); LiₐMnG_{b}O₂ (In the formula, 0.90≤a≤1.8 and 0.001≤b≤0.1); LiₐMn₂G_{b}O₄ (In the formula, 0.90≤a≤1.8 and 0.001≤b≤0.1); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulas above, A may be Ni, Co, Mn, or a combination thereof; B¹ may be Al, Ni, Co, Mn, Cr, Fe, Mg, Sr, V, a rare-earth element, or a combination thereof; D¹ may be O, F, S, P, or a combination thereof; E may be Co, Mn, or a combination thereof; F¹ may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, the cathode active material may be LiCoO₂, LiMnₓO₂ₓ(x=1, 2), LiNi₁₋ₓMn_{xO2x} (0<x<1), LiNi_{1-x-y}CoₓMn_{y}O₂ (0≤x≤0.5 and 0≤y≤0.5), LiFePO₄, or the like.

Needless to say, any of the aforementioned compounds that has a coating layer on the surface thereof may be used, or a mixture of any one of the aforementioned compounds and a compound having a coating layer may also be used. This coating layer may include a coating element compound, such as an oxide and a hydroxide of a coating element, oxyhydroxide of a coating element, an oxycarbonate of a coating element, and a hydroxycarbonate of a coating element. A compound forming such a coating layer may be amorphous or crystalline. The coating element included in the coating layer may include Mg, Al, Co, K, Na, Ca, Si, Ti, V, Sn, Ge, Ga, B, As, Zr, or a mixture thereof. For the process of forming the coating layer, any coating method that is capable of coating the above compound by using such elements, without adversely affecting the physical properties of cathode active material may be used without limitation (e.g., spray coating, precipitation, etc.), and such methods are commonly understood by those skilled in the art, and therefore will not be described in further detail.

Examples of the conductive material include carbon black, graphite powder, and the like. However, the conductive material is not limited to the aforementioned components and may be any conductive material available in the art.

For the binder, a vinylidene fluoride/hexafluoropropylene copolymer, polyvinylidene fluoride (PVDF), polyacrylonitrile, polymethyl methacrylate, polytetrafluoroethylene, and a mixture thereof, or a styrene butadiene rubber-based polymer, etc. may be used. However, the binder is not limited to the aforementioned components and may be any material available in the art as a binder.

For the solvent, N-methylpyrrolidone, acetone, or water, etc. may be used. However, the solvent is not limited to the aforementioned components and may be any solvent available in the art.

The content of each of the cathode active material, the conductive material, the binder, and the solvent may be at a level that is commonly used in lithium batteries. One or more of the conductive material, the binder, and the solvent may be absent depending on the use and composition of a lithium battery.

Next, the anode may be prepared.

For example, an anode active material composition may be prepared by combining an anode active material, a conductive material, a binder, and a solvent. The anode active material composition may be directly coated and dried on a metal current collector to thereby form an anode plate. In one or more embodiments, the anode active material composition may be cast on a separate support, and a film exfoliated from the support may be laminated on a metal current collector to thereby form an anode plate.

The anode active material may be any material available in the art as an anode active material of a lithium battery. For example, the anode active material may include one or more selected from among lithium metal, a metal alloyable with lithium, a transition metal oxide, a non-transition metal oxide, and a carbonaceous material.

Examples of the metal alloyable with lithium may include Si, Sn, Al, Ge, Pb, Bi, Sb, a Si-Y alloy (wherein Y is an alkali metal, an alkaline earth metal, an element in Group 13, an element in Group 14, a transition metal, a rare-earth metal, or a combination thereof, but not Si), a Sn-Y alloy (wherein Y is an alkali metal, an alkaline earth metal, an element in Group 13, an element in Group 14, a transition metal, a rare-earth metal, or a combination thereof, but not Sn), and the like. Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may be a lithium titanium oxide, a vanadium oxide, a lithium vanadium oxide, and the like.

For example, the non-transition metal oxide may be SnO₂, SiOₓ (0<x<2), and the like.

The carbonaceous material may be, for example, a crystalline carbon, an amorphous carbon, or a mixture thereof. Examples of the crystalline carbon may include graphite, including artificial graphite or natural graphite in shapeless, plate, flake, spherical or fiber form, and examples of the amorphous carbon may include soft carbon (low-temperature calcined carbon) or hard carbon, mesophase pitch carbides, calcined cokes, and the like.

The anode active material composition may utilize the same conductive material and binder as in the cathode active material composition above.

The anode active material, the conductive material, the binder, and the solvent are each used in an amount commonly used in lithium batteries. Depending on the use and configuration of a lithium battery, one or more of the conductive material, the binder, and the solvent may be omitted.

Next, a separator to be placed between the cathode and the anode may be prepared.

For the separator, any separator commonly used in lithium batteries may be utilized. Any separator capable of retaining a large quantity of electrolyte solution while exhibiting low resistance to ion migration in the electrolyte solution may be used. For example, the separator may be any material selected from among glass fiber, polyester, Teflon, polyethylene, polypropylene, polytetrafluoroethylene (PTFE), and a combination thereof. In addition, the separator may be in the form of a nonwoven fabric or a woven fabric. For example, a lithium ion battery may include a rollable separator formed of polyethylene, polypropylene, or the like, and a lithium ion polymer battery may include a separator having excellent organic electrolyte impregnation capability. In one or more embodiments, the separator may be prepared as follows.

A separator composition may be prepared by mixing a polymer resin, a filler, and a solvent. The separator composition may be directly coated and dried on top of an electrode to thereby form a separator. In one or more embodiments, the separator composition may be cast and dried on a support, and a separator film exfoliated from the support may be laminated on top of an electrode to thereby form a separator.

The polymer resin for use in the preparation of the separator above is not limited to any particular material, and any material used for a binder of an electrode may be used. For example, a vinylidene fluoride/hexafluoropropylene copolymer, polyvinylidene fluoride (PVDF), polyacrylonitrile, polymethyl methacrylate, or a mixture thereof may be used as the polymer resin.

In addition, the separator may include, without being limited to, a PES (polyethylene separator), a PPS (polypropylene separator), a CCS (ceramic coated separator), a PCS (polymer coated separator), a MCS (multi-layer coated separator), a MFS (multi-functional separator), and the like. The separator may be a combination of the aforementioned components.

Next, the above-described electrolyte solution may be prepared.

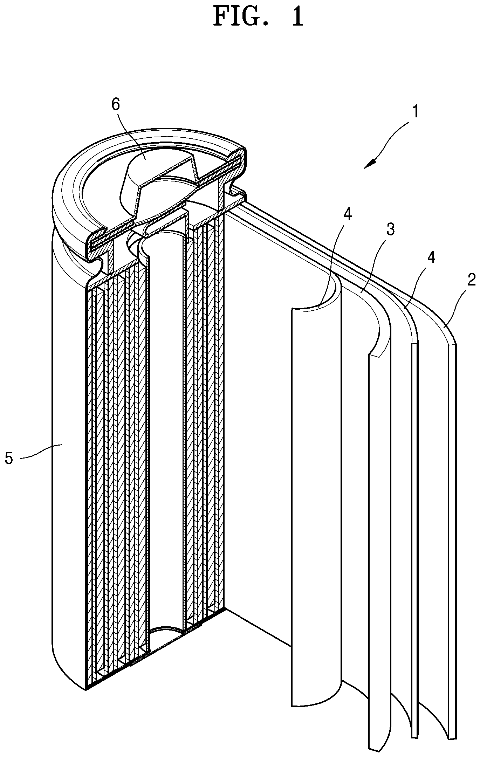

As shown in FIG. 1, the lithium battery 1 includes a cathode 3, an anode 2, and a separator 4. The cathode 3, the anode 2, and the separator 4 may be wound or folded so as to be accommodated in a battery case 5. Then, the battery case 5 may be injected with an organic electrolyte solution and sealed with a cap assembly 6 to thereby form a lithium secondary battery 1. The battery case may be a pouch type, a cylindrical type, a rectangular type, a thin-film type, and the like. For example, the lithium battery may be a large-scale thin film-type battery. The lithium battery may be a lithium ion battery.

In a cylindrical battery, an electrode assembly having a cylindrical shape in which a separator is wound between an anode and a cathode may be formed, the electrode assembly may be inserted into a cylindrical can, and an electrolyte solution may be injected into the cylindrical can. The cylindrical can may be formed of steel, a steel alloy, a nickel-plated steel, a nickel-plated steel alloy, aluminum, an aluminum alloy, or an equivalent thereof, but is not limited to the aforementioned materials. Furthermore, the cylindrical can may include a beading part on a lower part thereof to prevent a cap assembly from escaping therefrom, the beading part being depressed inwardly about the cap assembly, and may include a crimping part which is bent inwardly and formed above the beading part.

In particular, the battery structure having a separator disposed between a cathode and an anode may be stacked in multiple layers to form a battery pack, and such a battery pack may be used in all types of devices in which high capacity and high output are required. For example, such a battery pack may be used in a laptop computer, a smartphone, an electric vehicle, and the like.

A lithium secondary battery according to an embodiment may achieve excellent battery characteristics due to a significant reduction of DCIR increase, compared to a lithium secondary battery which employs a common nickel-rich lithium nickel composite oxide as a cathode active material.

A lithium secondary battery employing the cathode, anode, and electrolyte may have a driving voltage that has a lower limit of 2.5 V to 2.8 V, and an upper limit of 4.1 V or more, for example, of 4.1 V to 4.45 V.

In addition, the lithium secondary battery may be used in, without being limited to, power tools operated by electric motors; electric vehicles including an electric vehicle (EV), a hybrid electric vehicle (HEV), a plug-in hybrid electric vehicle (PHEV), and the like; electric two-wheeled vehicles including an electric bicycle (E-bike), an electric scooter (Escooter), and the like; an electric golf cart; and power storage systems and the like.

The term "alkyl group" as used herein refers to a branched or unbranched aliphatic hydrocarbon group. In an embodiment, an alkyl group may be unsubstituted and substituted. Examples of the alkyl group include, without being limited to a methyl group, an ethyl group, a propyl group, an isopropyl group, a butyl group, an isobutyl group, tert-butyl group, a pentyl group, a hexyl group, a cyclopropyl group, a cyclopentyl group, a cyclohexyl group, a cycloheptyl group, and the like, and the alkyl group may be optionally substituted in other embodiments. In another embodiment, an alkyl group may contain 1 to 6 carbon atoms. For examples, an alkyl group having 1 to 6 carbon atoms may be a methyl group, an ethyl group, a propyl group, an isopropyl group, a butyl group, an iso-butyl group, a sec-butyl group, a pentyl group, a 3-pentyl group, a hexyl group, and the like, but is not necessarily limited thereto.

One or more hydrogen atoms in the alkyl group may be substituted with a halogen atom, a C₁-C₂₀ alkyl group (examples: CF₃, CHF₂, CH₂F, CCl₃, etc.), a C₁-C₂₀ alkoxy group, a C₂-C₂₀ alkoxyalkyl group, a hydroxy group, a nitro group, a cyano group, an amino group, an amidino group, hydrazine, hydrazone, carboxylic group or a salt thereof, a sulfonyl group, a sulfamoyl group, a sulfonate group or a salt thereof, phosphorus acid or a salt thereof, or a C₁-C₂₀ alkyl group, a C₂-C₂₀ alkenyl group, a C₂-C₂₀ alkynyl group, a C₁-C₂₀ heteroalkyl group, a C₆-C₂₀ aryl group, a C₇-C₂₀ arylalkyl group, a C₆-C₂₀ heteroaryl group, a C₇-C₂₀ hetero aryl alkyl group, a C₆-C₂₀ heteroaryloxy group, or a C₆-C₂₀ heteroaryloxyalkyl group.

The term "alkenyl group" as used herein refers to a hydrocarbon group having 2 to 20 carbon atoms and including at least one carbon-carbon double bond, and includes but is not limited to, an ethenyl group, a 1-propenyl group, a 2-propenyl group, a 2-methyl-1-propenyl group, a 1-butenyl group, a 2-butenyl group, a cyclopropenyl group, a cyclopentenyl, a cyclohexenyl group, a cyclopentenyl group, and the like. In another embodiment, an alkenyl group may be substituted or unsubstituted. In another embodiment, the number of carbon atoms in an alkenyl group may be 2 to 40.

The term "alkynyl group" as used herein refers to a hydrocarbon group having 2 to 20 carbon atoms and including at least one carbon-carbon triple bond, and includes but is not limited to, an ethynyl group, 1-propynyl group, 1-butynyl group, 2-butynyl group, and the like. In another embodiment, the alkynyl group may be substituted or unsubstituted. In another embodiment, the alkynyl group may have 2 to 40 carbon atoms.

In the present specification, a substituent group is derived from an unsubstituted parent group, of which one or more hydrogen atoms are substituted with a different atom or functional group. Unless otherwise indicated, if a functional group is described as being "substituted", this means that the functional group is substituted with one or more substituents, each independently selected from among a C₁-C₂₀ alkyl group, a C₂-C₂₀ alkenyl group, a C₂-C₂₀ alkynyl group, a C₁-C₂₀ alkoxy group, a halogen, a cyano group, a hydroxy group, and a nitro group. If a functional group is described as being "optionally substituted", the functional group may be substituted with any one of the aforementioned substituents.

The term "halogen" as used herein includes fluorine, bromine, chlorine, iodine, and the like.

The term "alkoxy" as used herein refers to "alkyl-O-", wherein the alkyl is as described above. Examples of the alkoxy group include a methoxy group, an ethoxy group, a 2-propoxy group, a butoxy group, a t-butoxy group, a pentyloxy group, a hexyloxy group, and the like. One or more hydrogen atoms in the alkoxy group may be substituted with the same substituents as described above with respect to the alkyl group.

The term "heteroaryl" as used herein refers to a monocyclic or bicyclic organic group containing one or more heteroatoms selected from among N, O, P, and S, wherein the rest of ring atoms are carbon. The heteroaryl group may include, for example, 1-5 heteroatoms, and may include 5-10 ring members. The S or N may have various oxidation states through oxidation.

Examples of heteroaryl may include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl group, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, and 5-pyrimidin-2-yl.

The term "heteroaryl" as used herein includes cases in which a hetero aromatic ring is optionally fused with at least one aryl, cycloaliphatic, or heterocycle.

The term "carbon ring" as used herein refers to a saturated or partially unsaturated non-aromatic monocyclic, bicyclic, or tricyclic hydrocarbon group.

Examples of the monocyclic hydrocarbon may include a cyclopentyl group, a cyclopentenyl group, a cyclohexyl group, a cyclohexenyl group, and the like.

Examples of the bicyclic hydrocarbon may include bornyl, decahydronaphthyl, bicyclo[2.1.1]hexyl, bicyclo[2.2.1]heptyl, bicyclo[2.2.1]heptenyl, and bicyclo[2.2.2]octyl.

Examples of the tricyclic hydrocarbon may include adamantyl and the like.

One or more hydrogen atoms in the carbon ring may be substituted with the substituents as described above with respect to the alkyl group.

### MODE OF DISCLOSURE

The following Examples and Comparative Examples are provided to describe the embodiments in greater detail. However, it will be understood that the Examples are provided only to illustrate the embodiments and not to be construed as limiting the scope of the embodiments.

### (Preparation Example 1)

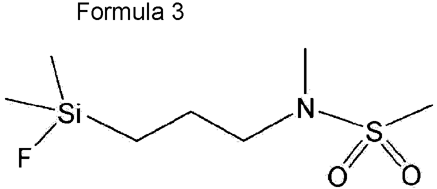

Through the below synthesis process, the compound represented by Formula 3 above was prepared.

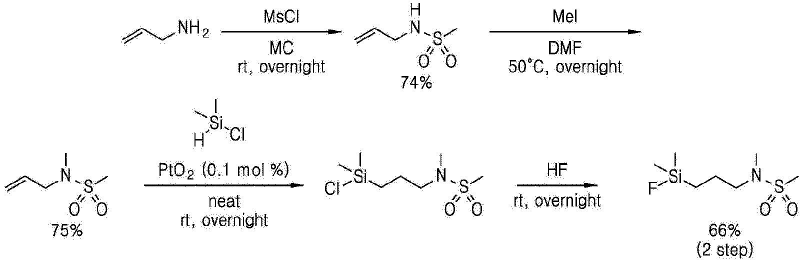

### Step 1: Synthesis of N-allyl-methanesulfonamide

After dissolving allylamine (1.0 eq) in methylene chloride (MC), and dropwise adding triethylamine (1.15 eq) thereto at room temperature, the temperature of the reaction mixture was lowered to 0 °C. While maintaining the temperature, methanesulfonyl chloride (1.12 eq) was dissolved in MC and slowly added dropwise. Once all of the solution was added, the reaction mixture was heated to room temperature and then stirred for about 12 hours. Once the reaction is complete, the reaction mixture was washed with a saturated NH₄Cl solution, and an organic layer was separated therefrom. The collected organic layer was dried with MgSO₄ and filtered, and the remaining filtrate was concentrated and purified by vacuum distillation to obtain colorless transparent liquid.
Yield 26.603 g, 74%; b.p. = 98 °C/ 0.45 torr; 1H NMR (400 MHz, CDCl3): δ 5.88 (ddt, 1H), δ 5.32 (dd, 1H), δ 5.23 (dd, 1H), 4.48 (bs, 1H), 3.79 (t, 2H), 2.98 (s, 3H)

### Step 2: Synthesis of N-allyl-N-methyl methanesulfonamide

N-Allyl-methanesulfonamide (1.0 eq) and K₂CO₃ (2.0 eq) were heated and stirred in a DMF solution at 50 °C for about 12 hours. Upon completion of the reaction, the reaction mixture was extracted with EA, and washed with water a few times to remove DMF. The collected organic layer was dried with MgSO₄ and filtered, and the remaining filtrate was concentrated and purified by vacuum distillation to obtain colorless transparent liquid.
Yield 9.49 g, 75%; b.p. = 102 °C/0.45 torr; 1H NMR (400 MHz, CDCl3): δ 5.83 (ddt, 1H), 5.31 (d, 1H), 5.28 (d, 1H), 3.78 (d, 2H), 2.82 (s, 6H)

### Step 3: Synthesis of N-[3-(chlorodimethylsilanyl)-propyl]-N-methyl methanesulfonamide

In a round-bottom flask heated and dried, PtO₂ (0.1 mol%) was placed and sealed with a rubber stopper, and then nitrogen atmosphere was created inside the flask. Then, after adding N-allyl-N-methyl methanesulfonamide (1.0 eq), the temperature of the reaction mixture was lowered to 0 °C. While maintaining the temperature, chlorodimethylsilane (2.0 eq) was slowly added dropwise. Once the reaction started and the heating stopped, the temperature of the reaction mixture was raised to room temperature and then, the reaction mixture was stirred for about 12 hours. Once the reaction is complete, the reaction mixture was filtered using Celite and methylene chloride to remove the catalyst therefrom. Using a vacuum distillation device, methylene chloride and excess of chlorodimethylsilane were removed from the filtered solution, and the resulting solution was used as is for the next reaction.

### Step 4: Synthesis of N-[3-(fluorodimethylsilanyl)-propyl]-N-methyl methanesulfonamide

The unpurified mixture having the catalyst removed therefrom in the previous reaction was transferred to a Teflon tube and combined with excess of a HF solution (48 wt%), and then was stirred for 12-24 hours. Once the reaction is complete, the excess of HF was neutralized with NaOH and NaHCO₃, and an extraction was performed using methylene chloride. The collected organic layer was dried with MgSO₄ and filtered, and the remaining filtrate was concentrated and purified by vacuum distillation to obtain colorless transparent liquid.
Yield 20.76 g, 2 step 66%; b.p. = 122 °C/0.45 torr; 1H NMR (400 MHz, CDCl3): δ 3.12 (t, 2H), 2.85 (s, 3H), 2.80 (s, 3H), 1.68 (m, 2H), 0.69 (m, 2H), 0.24 (d, 6H); 13C NMR (400 MHz, CDCl3): δ 52.61, 35.51, 34.65, 21.30, 13.41, 13.29, -1.29, -1.43

### (Preparation of Lithium Secondary Battery)

### Example 1

An electrolyte for a lithium secondary battery was prepared by adding 1.5 M LiPF₆ to a mixed solvent containing ethylene carbonate (EC), ethyl methyl carbonate (EMC), and dimethyl carbonate (DMC) in a volume ratio of 20:10:70, and then adding, as additives, 7 parts by weight of fluoroethylene carbonate (FEC), 0.2 parts by weight of LiBF₄ and 0.25 parts by weight of succinonitrile (SN), 1 wt% of the compound synthesized in Preparation Example 1, and 0.5 parts by weight of a compound represented by Formula 4A above, with respect to 100 parts by weight of an electrolyte solution consisting of a lithium salt and an organic solvent.

97 wt% of LiNi_{0.8}Co_{0.1}Al_{0.1}O₂ as a cathode active material, 0.5 wt% of artificial graphite powder as a conductive material, 0.8 wt% of carbon black, and 1.7 wt% of polyvinylidene fluoride (PVdF) were mixed together and introduced into N-methyl-2-pyrrolidone, and then stirred for 4 hours using a mechanical stirrer to thereby prepare a cathode active material slurry. Using a coater, the slurry was uniformly coated on a 12 µm-thick aluminum current collector and then dried by hot air at 100 °C. After the drying, the dried product of the slurry was roll-pressed to prepare a cathode.

87 wt% of artificial graphite as an anode active material, 10.5 wt% of a silicon composite, 1.5 wt% of SBR, and 1 wt% of CMC were mixed together and dispersed in water to prepare an anode active material slurry. Using a coater, the slurry was uniformly coated on a 10 µm-thick copper current collector in a continuous manner, and then dried by hot air at 100 °C. The dried product of the slurry was roll-pressed to prepare an anode.

A cylindrical lithium secondary battery was prepared using the cathode and the anode prepared above, a 14 µm-thick polyethylene separator, and the electrolyte.

### Comparative Example 1

A lithium secondary battery was prepared following the same process as Example 1, except that LiPO₂F₂ was added instead of the compound synthesized in Preparation Example 1.

### Comparative Example 2

A lithium secondary battery was prepared following the same process as Example 1, except that the compound represented by Formula 11 below was added instead of the compound synthesized in Preparation Example 1.

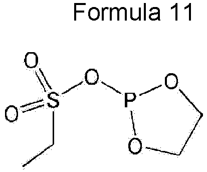

### Comparative Example 3

A lithium secondary battery was prepared following the same process as Example 1, except that butane sultone (BS) was added instead of the compound synthesized in Preparation Example 1.

### Comparative Example 4

A lithium secondary battery was prepared following the same process as Example 1, except that the compound represented by Formula 12 below was added instead of the compound synthesized in Preparation Example 1.

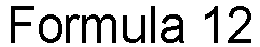

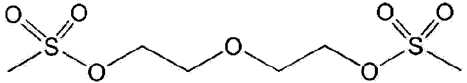

### Evaluation Example 1: Evaluation of direct current internal resistance (DC-IR) when stored under high-temperature conditions (60 °C)

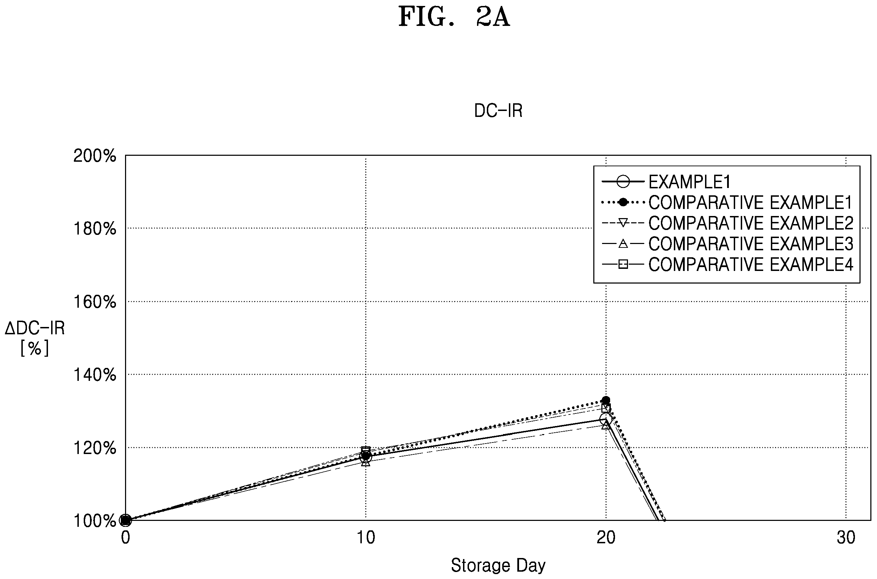

The lithium secondary batteries prepared in Example 1 and Comparative Examples 1 to 4 were each preserved at 60 °C for 20 days in a charged state (SOC, state of charge = 100%) and then evaluated for internal resistance increase rate when preserved at high temperature (60 °C). The results thereof are shown in FIG. 2A.

### DC-IR was evaluated by the following method.

The lithium secondary batteries prepared in Example 1 and Comparative Examples 1 to 4 were each charged at 4 A (1.6 C) and 4.2 V at room temperature (25 °C) and were cut-off at 100 mA with an applied constant voltage of 4.2 V, and were rested for 30 minutes. Subsequently, the batteries were discharged with 10 A for 10 seconds, 1 A for 10 seconds, and 10 A for 4 seconds, and the current and voltage at 18 s and 23 s were measured to calculate initial resistance (the difference between resistance at 18 s and resistance at 23 s) by using ΔR=ΔV/ΔI.

After charging in full-charging conditions as described above, the lithium secondary batteries were preserved at 60 °C for 30 days, and DC-IR was measured. Then, resistance increase rates before and after preservation, at day 10 and day 20, were calculated using Equation 1. Resistance Increase Rate = [(DC-IR after x days of preservation - Initial DC- IR)/Initial DC-IR] × 100

As shown in FIG. 2A, the lithium secondary battery in Example 1 after preserving the lithium secondary battery at a high temperature shows a decrease in resistance increase rate compared to those of Comparative Examples 1, 2, and 4, and a similar resistance increase rate as that of Comparative Example 3 using BS that is known as an additive to improve high-temperature characteristics.

### Evaluation Example 2: Evaluation of Capacity Retention Ratio and Capacity Recovery Ratio when Stored at High temperature (60 °C).

The lithium secondary batteries prepared in Example 1 and Comparative Examples 1 to 4 were each charged at 4 A (1.6 C) and 4.2 V at room temperature (25 °C), and the charging was cut-off at 100 mA with an applied constant voltage of 4.2 V. Then, the batteries were stored at 60 °C for 30 days. For capacity retention ratio, remaining capacities after 10 day-preservation and 20 day- preservation were calculated according to Equation 2 below. For capacity recovery ratio, recovery capacity was calculated by discharging a battery after re-charging the same under the same charging conditions at the start of storage according to Equation 3 below. Capacity Retention Ratio = [Capacity remaining after x days of preservation / Initial capacity at the start of storage] × 100 Capacity Recovery Ratio = [Recovery capacity after x days of preservation / Initial capacity at the start of storage] × 100

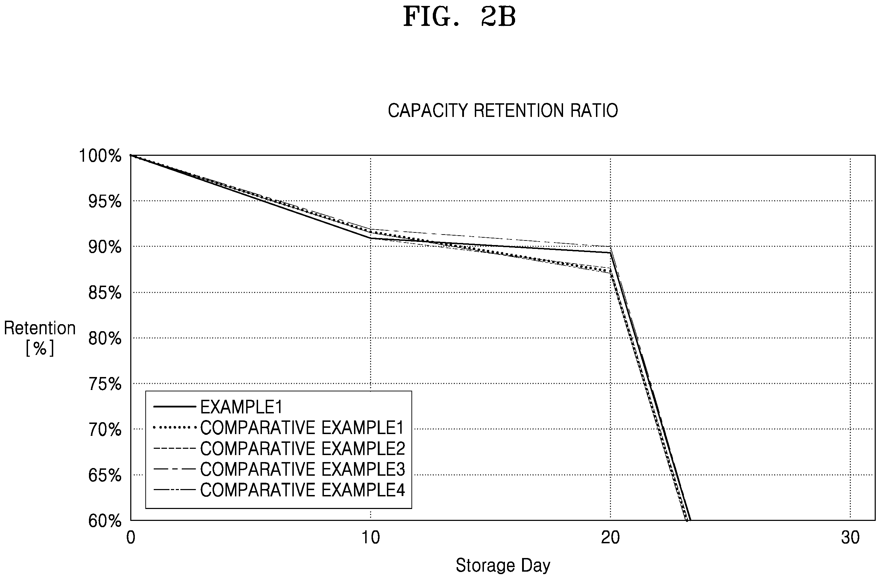

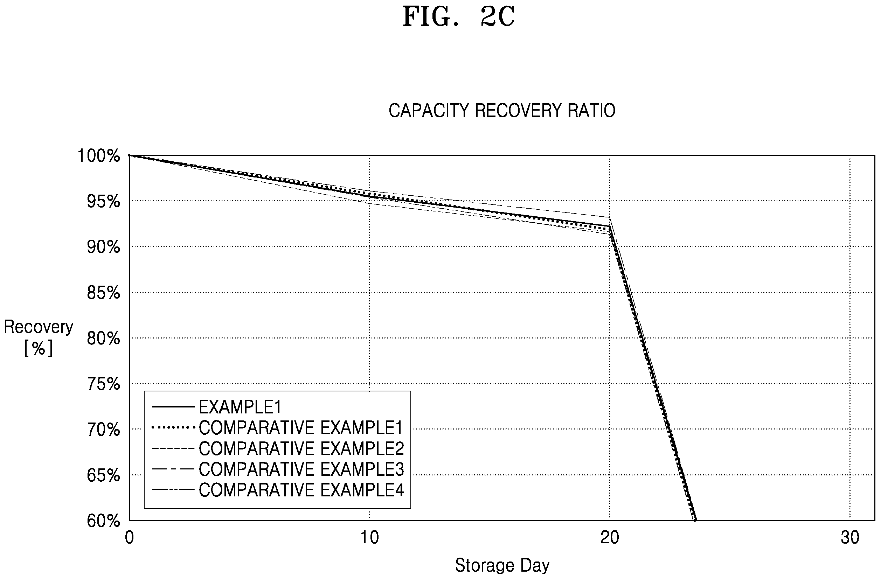

The results of capacity retention ratio and capacity recovery ratio measurements are shown in FIG. 2B and FIG. 2C. Capacity retention ratio is abbreviated as 'Retention' in FIG. 2B, and capacity recovery ratio is abbreviated as 'Recovery' in FIG. 2C.

As shown in FIG. 2B, the lithium secondary battery in Example 1 shows an increase in capacity retention ratio compared to Comparative Examples 1, 2, and 4, and showed a similar level as Comparative Example 3 using BS known as an additive to improve high-temperature characteristics.

Also, as shown in FIG. 2C, the lithium secondary battery in Example 1 shows a recovery capacity that is slightly less than that of Comparative Example 3 using BS known as an additive to improve high-temperature characteristics, but is higher compared to Comparative Examples 1, 2, and 4.

### Evaluation Example 3: Evaluation of Room-Temperature Lifetime Characteristics

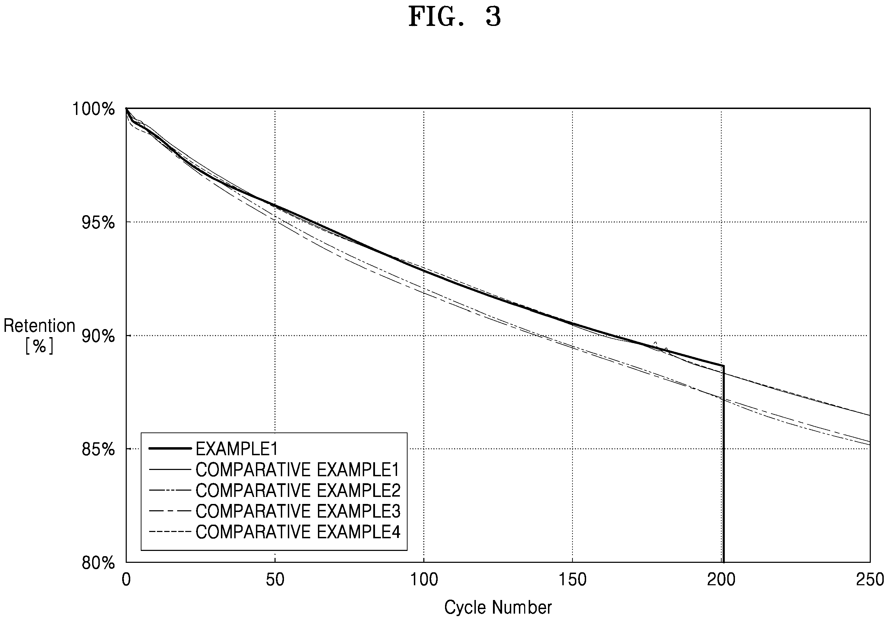

The lithium secondary batteries prepared in Example 1 and Comparative Examples 1 to 4 were each charged and discharged 250 times at room temperature (25 °C) under the conditions of charging at a constant current-constant voltage of 1.6 C and 4.2 V, cut-off at 0.03 C, and discharging at a constant current of 8 C and 2.5 V. Then, by measuring discharge capacity, capacity ratios (capacity retention ratio) for each cycle with respect to a single cycle discharge capacity are shown in FIG. 3.

As shown in FIG. 3, the lithium secondary battery according to Example 1 show significantly improved room-temperature lifetime characteristics compared to that of Comparative Example 3 using BS known as an additive to improve high-temperature characteristics, and show similar or slightly improved room-temperature lifetime characteristics compared to Comparative Examples 1, 2, and 4.

Hereinbelow, Examples 2 to 5 were performed with respect to a content change in the compound synthesized in Preparation Example 1, and a combination with LiPO₂F₂ as an alternative additive.

### Example 2

A lithium secondary battery was prepared following the same process as Example 1, except that 7 parts by weight of fluoroethylene carbonate (FEC), 0.5 part by weight of succinonitrile (SN), and 2 parts by weight of the compound synthesized in Preparation Example 1 were added as the additives with respect to 100 parts by weight of the electrolyte solution containing the lithium salt and the organic solvent.

### Example 3

A lithium secondary battery was prepared following the same process as Example 2, except that 1.5 parts by weight of the compound synthesized in Preparation Example 1 was added, and 0.25 parts by weight of LiPO₂F₂ was further added.

### Example 4

A lithium secondary battery was prepared following the same process as Example 2, except that 1 part by weight of the compound synthesized in Preparation Example 1 was added and 0.5 parts by weight of LiPO₂F₂ was further added.

### Example 5

A lithium secondary battery was prepared following the same process as Example 2, except that 0.5 parts by weight of the compound synthesized in Preparation Example 1 was added and 0.75 parts by weight of LiPO₂F₂ was further added.

### Evaluation Example 4: Evaluation of lifetime characteristics at room temperature

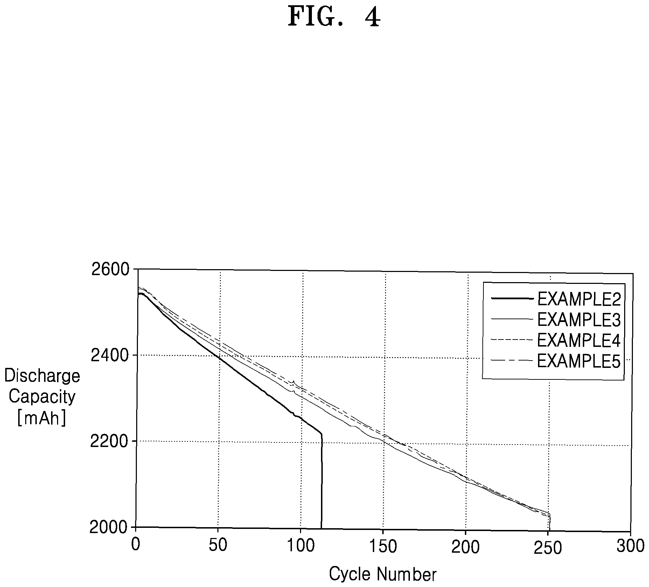

The lithium secondary batteries prepared in Examples 2 to 5 were evaluated for their room-temperature lifetime characteristics, following the same procedure described with respect to Evaluation Example 4. The results thereof are shown in FIG. 4.

As can be seen in FIG. 4, even when the content of the compound synthesized in Preparation Example 1 is reduced, through a combination with LiPO₂F₂ as an alternative additive, an improvement in the lifetime characteristics at room temperature may be achieved.

Although one or more embodiments have been described with reference to the drawings and examples, these embodiments are merely exemplary, and those skilled in the art shall understand that various modifications and equivalent other embodiments are possible therefrom. Accordingly, the scope of the present inventive concept shall be defined by the appended claims.

### EXPLANATION OF REFERENCE NUMERALS DESIGNATING THE MAJOR ELEMENTS OF THE DRAWINGS

1: LITHIUM SECONDARY BATTERY
2: ANODE
3: CATHODE
4: SEPARATOR
5: BATTERY CASE
6: CAP ASSEMBLY

### INDUSTRIAL APPLICABILITY

By using an electrolyte for a lithium secondary battery according to an embodiment, improvements in high-temperature storage characteristics and cycle life characteristics of a lithium secondary battery may be achieved.

## Claims

1. An electrolyte for a lithium secondary battery, the electrolyte comprising:
a lithium salt; an organic solvent; and an additive,
wherein the additive comprises a compound which is represented by Formula 1: 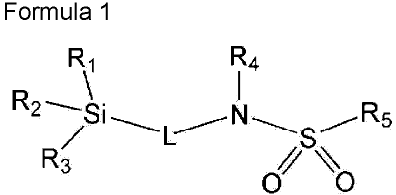 wherein in Formula 1,
R¹ to R⁵ each independently are selected from among hydrogen, deuterium, -F (fluoro group), -CI (chloro group), -Br (bromo group), -I (iodo group), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, an unsubstituted or substituted C₁-C₆₀ alkyl group, an unsubstituted or substituted C₂-C₆₀ alkenyl group, an unsubstituted or substituted C₂-C₆₀ alkynyl group, an unsubstituted or substituted C₁-C₆₀ alkoxy group, an unsubstituted or substituted C₃-C₁₀ cycloalkyl group, an unsubstituted or substituted C₂-C₁₀ heterocycloalkyl group, an unsubstituted or substituted C₃-C₁₀ cycloalkenyl group, an unsubstituted or substituted C₂-C₁₀ heterocycloalkenyl group, an unsubstituted or substituted C₆-C₆₀ aryl group, an unsubstituted or substituted C₆-C₆₀ aryloxy group, an unsubstituted or substituted C₆-C₆₀ arylthio group, an unsubstituted or substituted C₂-C₆₀ heteroaryl group, an unsubstituted or substituted monovalent non-aromatic condensed polycyclic group, an unsubstituted or substituted monovalent non-aromatic condensed heteropolycyclic group, -N(Q₁)(Q₂), and -B(Q₆)(Q₇), wherein Q₁ to Q₇ each independently are selected from among hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀aryl group, a C₆-C₆₀ aryloxy group, a C₆-C₆₀ arylthio group, a C₂-C₆₀ heteroaryl group, a monovalent non-aromatic condensed polycyclic group and a monovalent non-aromatic condensed heteropolycyclic group;
at least one of R¹ to R³ is a fluoro group (-F); and
L is selected from among O, S, a carbonyl group, an unsubstituted or substituted C₁₋₂₀ alkylene group, an unsubstituted or substituted C₂₋₂₀ alkenylene group, an unsubstituted or substituted C₂₋₂₀ alkynylene group, an unsubstituted or substituted C₁₋₂₀ heteroalkylene group, an unsubstituted or substituted C₂₋₂₀ heteroalkenylene group, an unsubstituted or substituted C₂₋₂₀ heteroalkynylene group, an unsubstituted or substituted C₃₋₂₀ cycloalkyl group, an unsubstituted or substituted 3-20 membered heterocyclo group, an unsubstituted or substituted C₅₋₂₀ aryl group, an unsubstituted or substituted 5-20 membered heteroaryl group, and -N(Q₁)-, wherein Q₁ is as described above.

2. The electrolyte of claim 1,
wherein one or two from among R¹ to R³ are a fluoro group (-F).

3. The electrolyte of claim 1,
wherein R¹ to R⁵ each independently are selected from among an unsubstituted or substituted C₁-C₈ alkyl group, an unsubstituted or substituted C₂-C₈ alkenyl group, an unsubstituted or substituted C₂-C₈ alkynyl group, or an unsubstituted or substituted C₁-C₈ alkoxy group;
one or two from among R¹ to R³ are a fluoro group (-F); and
L is selected from among an unsubstituted or substituted C₁₋₈ alkylene group, an unsubstituted or substituted C₂₋₄ alkenylene group, an unsubstituted or substituted C₂₋₄ alkynylene group, an unsubstituted or substituted C₁₋₄ heteroalkylene group, an unsubstituted or substituted C₂₋₄ heteroalkenylene group, an unsubstituted or substituted C₂₋₄ heteroalkynylene group, an unsubstituted or substituted C₃₋₆ cycloalkyl group, an unsubstituted or substituted 3-8 membered heterocyclo group, an unsubstituted or substituted C₅₋₈ aryl group, and an unsubstituted or substituted 5-8 membered heteroaryl group.

4. The electrolyte of claim 1,
wherein the compound is represented by Formula 2: 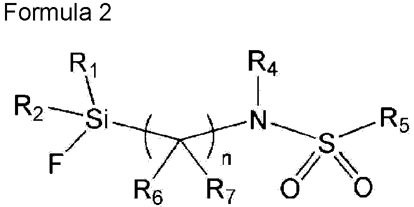
wherein in Formula 2,
R₁, R₂, R₄, and R₇ each independently are selected from among hydrogen, a halogen, an unsubstituted or substituted C₁-C₈ alkyl group, an unsubstituted or substituted C₂-C₈ alkenyl group, an unsubstituted or substituted C₂-C₈ alkynyl group, an unsubstituted or substituted C₁-C₈ alkoxy group, an unsubstituted or substituted C₃-C₈ cycloalkyl group, an unsubstituted or substituted C₂-C₈ heterocycloalkyl group, an unsubstituted or substituted C₃-C₈ cycloalkenyl group, an unsubstituted or substituted C₂-C₈ heterocycloalkenyl group, an unsubstituted or substituted C₆-C₈ aryl group, an unsubstituted or substituted C₆-C₈ aryloxy group, an unsubstituted or substituted C₆-C₈ arylthio group, and an unsubstituted or substituted C₂-C₈ heteroaryl group; and
n is an integer of 1 to 20.

5. The electrolyte of claim 4,
wherein n is an integer of 1 to 10.

6. The electrolyte of claim 4,
wherein n is an integer of 1 to 5.

7. The electrolyte of claim 1,
wherein the compound is represented by Formula 2a: 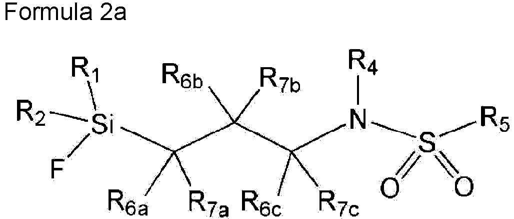
wherein in Formula 2a,
R₁, R₂, R₄, R₅, R₆ₐ, R_{6b}, R_{6c}, R₇ₐ, R_{7b}, and R₇, each independently are selected from among hydrogen, a halogen, an unsubstituted or substituted C₁-C₈ alkyl group, an unsubstituted or substituted C₂-C₈ alkenyl group, an unsubstituted or substituted C₂-C₈ alkynyl group, an unsubstituted or substituted C₁-C₈ alkoxy group, an unsubstituted or substituted C₃-C₈ cycloalkyl group, an unsubstituted or substituted C₂-C₈ heterocycloalkyl group, an unsubstituted or substituted C₃-C₈ cycloalkenyl group, an unsubstituted or substituted C₂-C₈ heterocycloalkenyl group, an unsubstituted or substituted C₆-C₈ aryl group an unsubstituted or substituted C₆-C₈ aryloxy group, an unsubstituted or substituted C₆-C₈ arylthio group, and an unsubstituted or substituted C₂-C₈ heteroaryl group.

8. The electrolyte of claim 1,
wherein the compound is represented by Formula 3:

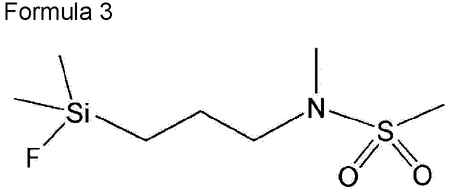

9. The electrolyte of claim 1,
wherein a content of the compound is 0.001 part by weight to 20 parts by weight with respect to 100 parts by weight of an electrolyte solution comprising the lithium salt and the organic solvent.

10. The electrolyte of claim 1, further comprising a compound represented by Formula 4: 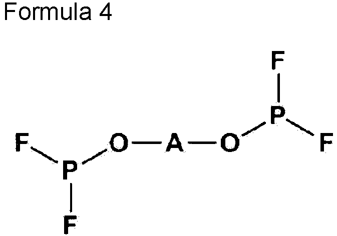 wherein in Formula 4,
A is an unsubstituted or substituted aliphatic hydrocarbon or (-C₂H₄-O-C₂H₄-)n,
wherein n is selected from among integers of 1 to 10, and
the substituted aliphatic hydrocarbon has one or more substituents, each independently selected from among a C₁-C₂₀ alkyl group, a C₂-C₂₀ alkenyl group, a C₂-C₂₀ alkynyl group, a C₁-C₂₀ alkoxy group, a halogen, a cyano group, a hydroxy group, and a nitro group.

11. The electrolyte of claim 10,
wherein in Formula 4, A is at least one selected from among a C₁-C₂₀ aliphatic hydrocarbon; a C₁-C₂₀ aliphatic hydrocarbon substituted with at least one of a C₁-C₂₀ alkyl group, a C₂-C₂₀ alkenyl group, a C₂-C₂₀ alkynyl group, a C₁-C₂₀ alkoxy group, a halogen, a cyano group, a hydroxyl group, and a nitro group; and (-C₂H₄-O-C₂H₄-)ₙ wherein n is an integer selected from 1 to 5.

12. The electrolyte of claim 10,
wherein in Formula 4, A is a C₁-C₂₀ alkylene group, a C₂-C₂₀ alkenylene group, or a C₂-C₂₀ alkynylene group.

13. The electrolyte of claim 10,
wherein in Formula 4, A is a methylene group, an ethylene group, a propylene group, a butylene group, or an ethenylene group.

14. The electrolyte of claim 10,
wherein the compound represented by Formula 4 is a compound represented by Formula 4a:

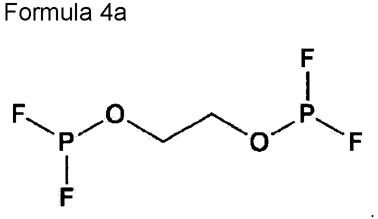

15. The electrolyte of claim 10,
wherein a content of the compound represented by Formula 4 is 0.01 part by weight to 5 parts by weight with respect to 100 parts by weight of an electrolyte solution comprising the lithium salt and the organic solvent.

16. The electrolyte of claim 1,
wherein the electrolyte further comprises an additive, wherein the additive comprises at least one from among a vinylene carbonate (VC), a fluoroethylene carbonate (FEC), a difluoroethylene carbonate (DFEC), a chloroethylene carbonate (CEC), a dichloroethylene carbonate (DCEC), a bromoethylene carbonate (BEC), a dibromoethylene carbonate (DBEC), a nitroethylene carbonate, a cyanoethylene carbonate, a vinylethylene carbonate (VEC), succinonitrile (SN), adiponitrile (AN), 1,3,6-hexanetricyanide (HTCN), a propene sultone (PST), a propanesultone (PS), lithium tetrafluoroborate (LiBF₄), lithium difluorophosphate (LiPO₂F₂), and 2-fluoro biphenyl (2-FBP).

17. A lithium secondary battery, comprising:
a cathode comprising a cathode active material;
an anode comprising an anode active material; and
an electrolyte as claimed in claim 1, disposed between the cathode and the anode.

18. The electrolyte of claim 17,
wherein the cathode active material comprises a lithium transition metal oxide represented by Formula 8:
Formula 8 LiₐNiₓCo_{y}M_{z}O_{2-b}A_{b}
wherein in Formula 8, 1.0≤a≤1.2, 0≤b≤0.2, 0.6≤x<1, 0<y≤0.3, 0<z≤0.3, and x+y+z=1, M is at least one selected from among manganese (Mn), vanadium (V), magnesium (Mg), gallium (Ga), silicon (Si), tungsten (W), molybdenum (Mo), iron (Fe), chromium (Cr), copper (Cu) ), zinc (Zn), titanium (Ti), aluminum (Al), and boron (B), and A is F, S, Cl, Br, or a combination thereof.
